Europäisches Patentamt

European Patent Office

Office européen des brevets

(19)

(11) Publication number: **0 032 814**
**A1**

# EUROPEAN PATENT APPLICATION

(12)

(21) Application number: **81300171.6**

(51) Int. Cl.³: **F 16 K 17/02**

(22) Date of filing: **15.01.81**

(30) Priority: **16.01.80 GB 8001438**

(71) Applicant: **Peabody Holmes Limited, Turnbridge, Huddersfield, HD1 6RB (GB)**

(43) Date of publication of application: **29.07.81**
**Bulletin 81/30**

(72) Inventor: **Groves, John Frederick, 16, Occupation Road Lindley, Huddersfield West Yorkshire, HD3 3AZ. (GB)**

(84) Designated Contracting States: **BE DE FR IT NL SE**

(74) Representative: **Lees, Clifford et al, APPLEYARD, LEES & CO. 15, Clare Road, Halifax Yorkshire, HX1 2HY (GB)**

(54) **Pressure relief valves.**

(57) The invention relates to pressure relief valves of the kind in which there is a valve member (34) in the form of an inverted cup with its skirt normally resting on a valve seat (32) around an aperture (28,30) the valve member (34) being movably away from the seat to open a passage through the aperture (28,30) and in which an obturator (22) is located within the valve member (34) and fixed relatively to the valve seat (32). In this kind of valve, the obturator (22) restricts access of the fluid to the area of the valve member (34) on which the fluid pressure acts, and this reduces chattering. Said valve includes a by-pass conduit (54) leading from an auxiliary inlet (52) separate from the valve aperture (28,30) to the space (56) between the closed end of the cup shaped valve member (34) and the obturator (22).

- 1 -

"Pressure relief valves"

The invention is concerned with pressure relief valves, which are adapted to open to relieve an excessive pressure differential in a fluid flow system. More particularly, the invention relates to pressure relief valves of a kind in which, in an attempt to prevent "chattering" of the resiliently loaded valve member (i.e. repeated, high frequency, opening and closing of the valve) the valve member takes the form of a cup with its lip normally resting on a valve seat around an aperture (which forms a valve port) and there is an obturator located within the cup. The obturator is of smaller area than the area bounded by the skirt of the cup, so that there is a "throat" between the obturator and the skirt. The annular space under the closed end of the valve member is largely isolated from pressure variations under the obturator by the restriction created by the throat.

For the purpose of explanation, it will be assumed that a pressure relief valve of the kind referred to is fitted to a pipe connected to the output of a positive displacement blower, which is blowing air through the pipe. Some positive displacement blowers (for example Roots blowers) produce a pulsating pressure, and if there were no restriction on the access of the air under pressure to the inside of the cup, then the valve member could open and close at each positive pressure pulse created by the blower and this would give rise to chattering. However, because the pressure differentials occurring on the pressure side of the valve member are only transmitted to the effective area of the inside of the cup through the restriction between the obturator and the skirt wall of the valve member, these pressure pulsations caused by the pump operating normally, are insufficient to open the valve prematurely. Only if there is an appreciable build-up of average pressure will the cup like member be lifted off its seat to allow fluid to flow out through the aperture.

There are however certain problems associated with the use of valves of the kind referred to. Generally the valve is fitted to the branch of a T-piece connected in a pipe line, and it will be appreciated that there is always a pressure drop in fluid flowing round the comparatively sharp bend of the T-piece. In addition, it may not be practicable to site the valve very near to the pump and consequently there will be a pressure drop between the pump and the valve, especially if the pipe follows a tortuous path between the pump and the valve. These pressure drops in the pipe line are of increased value at high flow rates. One of the purposes of the relief valve is to protect the pump against excessive temperature rise which accompanies an excessive pressure increase but the pressure drops between the pump and valve may be such that the valve fails to protect the pump, and in any event, the pressure drops prevent very fine setting of the critical pressure at the pump which will cause operation of the valve. The primary object of the invention is to ensure a quick response of the valve to pressure variations, whilst retaining the anti-chatter effect of the obturator.

According to the invention, a pressure relief valve in which there is a valve member in the form of an inverted cup with its skirt normally resting on a

- 3 -

valve seat around an aperture, the valve member being movable away from the seat to open a passage through the aperture, but loaded into the closed position, and an obturator located within the valve member and fixed relatively to the valve seat is <u>characterised</u> <u>in</u> <u>that</u> a by-pass conduit is provided, leading from an auxiliary inlet of the valve separate from the aperture to the space between the closed end of the valve member and the obturator. The by-pass conduit provides a means whereby a direct connection can be established between the pump outlet and the valve member, which is substantially isolated from any pressure drops in the pipe line between the pump and valve.

Preferably the cross-sectional area of the by-pass is not greater than 0.5% of the cross-sectional area of the aperture. The pressure on the inside of the valve member skirt acts on the closed end of the valve member only through the "throat" between the obturator and the skirt. The value of the pressure acting on the valve member through the by-pass will normally be greater than that acting through the "throat". In fact, the by-pass is designed to supply all the fluid required to move the valve member off its seat. The "throat" could be reduced to zero by arranging the cup like valve member to slide on the obturator. However, in the preferred construction the effective cross-sectional area of the obturator is smaller than the area of the closed end of the valve member inside the skirt. Thus the "throat" is formed by a relatively narrow gap between the inside of the skirt of the valve member and the outside of the obturator all round the obturator. Preferably part of the by-pass extends through the obturator.

- 4 -

Under normal operating conditions - and assuming that the interior of the pipe line is at a positive pressure higher than atmospheric pressure - there will be practically no flow in the by-pass pipe and in the by-pass conduit. Hence, the pressure in the by-pass system is virtually isolated from pressure drops attributable to the flow of the fluid in the main pipe line. Of course, there are the fluctuations in supply pressure due to the pulse type flow created by the pump, but these will be damped by the small bore by-pass so that they are insufficient to cause opening of the valve. If the pressure at the pump outlet builds up to a critical level, then this pressure is transmitted to the underside of the valve member (without substantial reduction due to fluid mass flow) and the valve will be opened. Hence it is possible to set the valve to open practically instantaneously on the occurrence of excessive pressure at the pump outlet.

According to a preferred construction, the valve has a body comprising a seating element and the obturator, the aperture being formed through the seating element and a face of the seating element providing the valve seat, the obturator being spaced from the valve seat but connected to the seating element by a web arranged so that it permits fluid flow between the seat side of the aperture and the obturator, the seating element, obturator and web being constructed as an integral valve body, the auxiliary inlet being formed in the seating member and the by-pass conduit extending through the seating member the web and the obturator. Preferably the web extends into the aperture and across the aperture from one side to the other, thus dividing the aperture into two separate portions.

This construction of the valve body greatly facilitates the manufacture of the valve so as to provide low functional tolerances at economic cost.

In a preferred arrangement a fluid flow system comprises a pump with a pipe line connected to its outlet and a pressure relief valve connected in the pipe line, the pressure relief valve having a valve member in the form of an inverted cup with its skirt normally resting on a valve seat around an aperture, the valve member being movable away from the seat to open a passage through the aperture, but loaded into the closed position, and an obturator located within the valve member and fixed relatively to the valve seat, the system being characterised in that a by-pass pipe leads from the outlet of the pump, or from the pipe line adjacent the pump outlet, to an auxiliary inlet in the valve separate from the aperture, there being a conduit in the valve leading from the auxiliary inlet to the space between the closed end of the valve member and the obturator.

A pressure relief valve, and two fluid flow systems incorporating the valve, will now be described by way of examples, with reference to the accompanying drawings, in which:-

Figure 1 is a diagram showing a Roots blower and associated equipment,

Figure 2 is a cross-section through a pressure relief valve,

Figure 3 is a cross-section in the direction of the Arrows III-III in Figure 2, and

Figure 4 is a diagram similar to Figure 1, but showing an alternative arrangement.

- 6 -

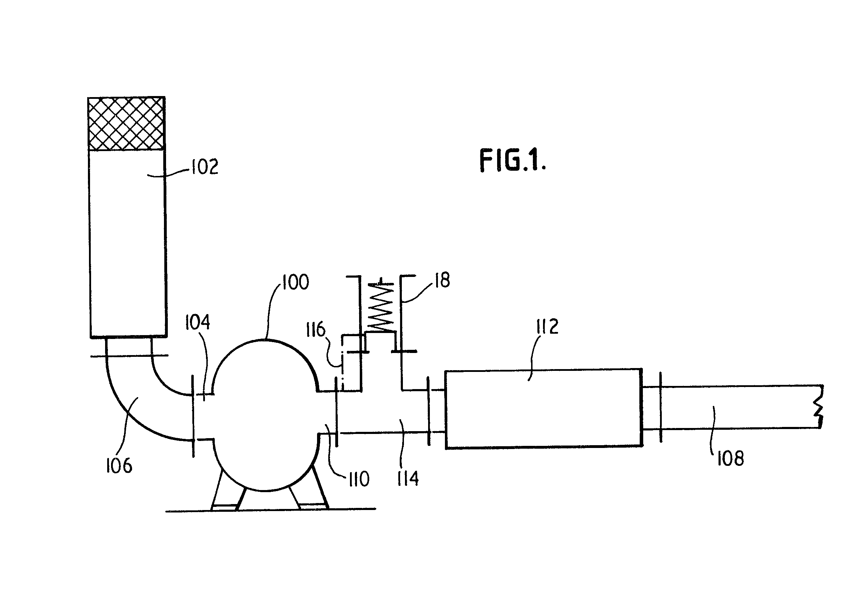

In Figure 1, there is shown a Roots blower type positive displacement pump 100 used to supply air under a positive pressure (that is to say a pressure higher than atmospheric pressure) to equipment (not shown). Roots blowers are well known and therefore no further description of the pump 100 is required. An inlet silencer 102 is provided on the inlet side of the pump and is connected to the inlet 104 of the pump through an inlet pipe 106. A pipe line 108 is connected to the outlet 110 of the pump and leads from the pump to the equipment which uses the air supply from the pump. A delivery silencer 112 is provided in the pipe line 108.

In this arrangement, air is drawn by the pump through the inlet silencer 102 and the inlet pipe 106 and so long as the pump 100 is in operation, air under positive pressure will be blown through the pipe line 100.

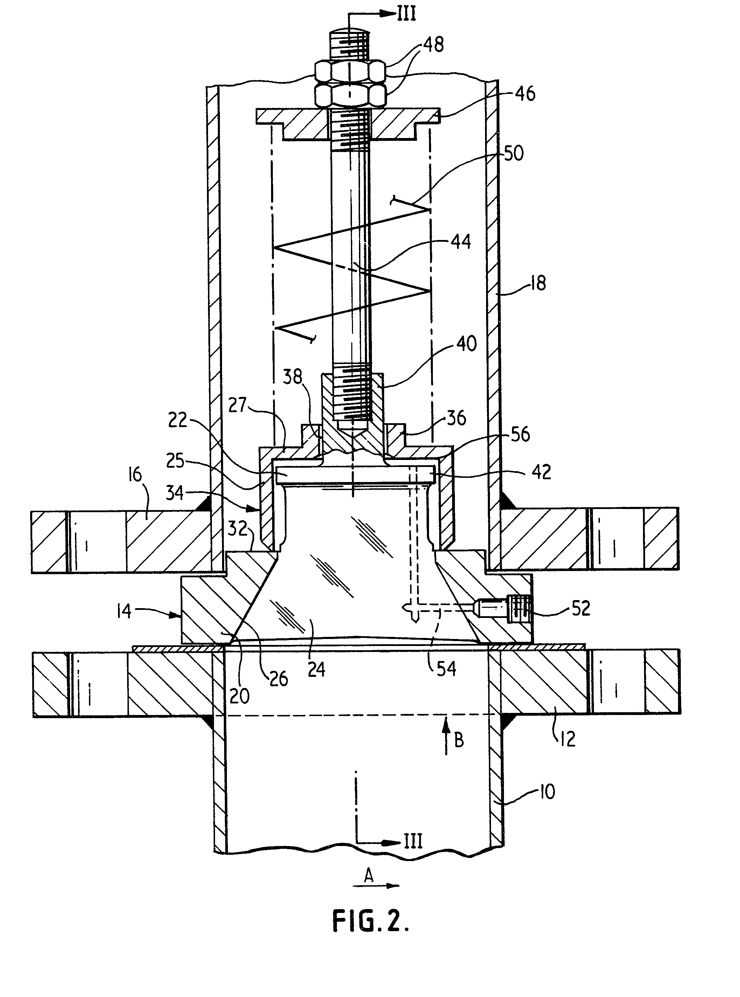

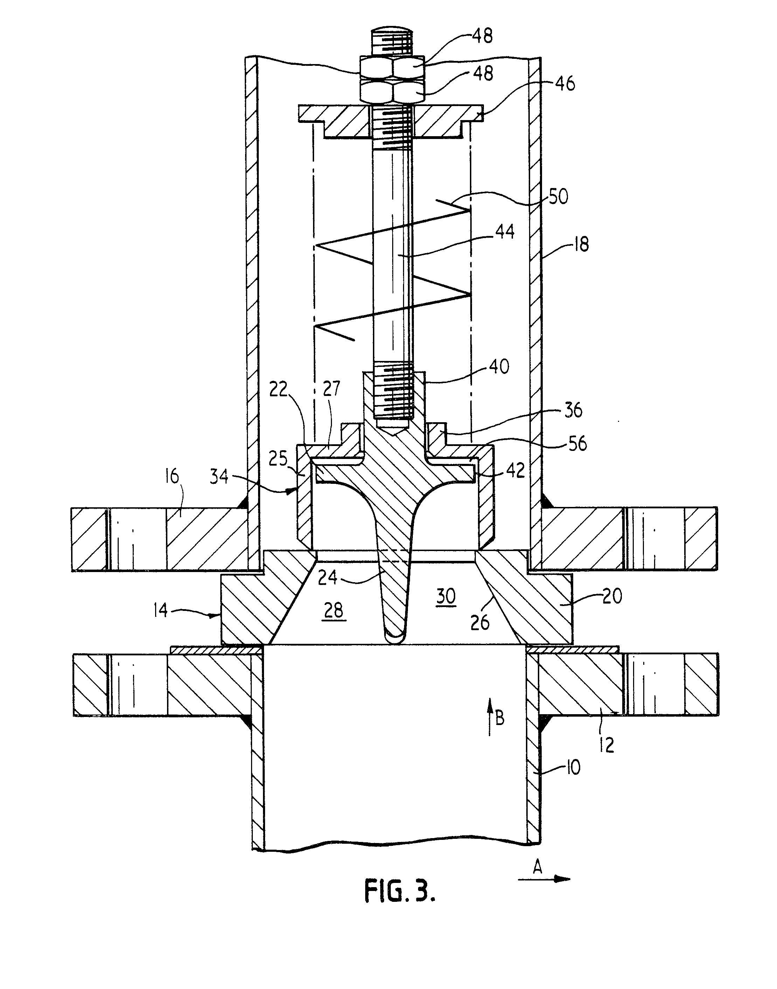

A T-piece 114 is fitted in the pipe line 108, and part of the branch of the T-piece is shown at 10 in Figures 2 and 3. The branch 10 is at right angles to the pipe line itself, and therefore the main fluid flow from the pump 100 through the pipe line 108, will be in the direction of the Arrow A, and hence any flow which occurs upwardly through the branch 10 in the direction of the Arrow B requires a sudden change in the direction of flow of the fluid, which of course, produces an appreciable reduction in the pressure in the fluid in the branch 10.

At its top end, the branch 10 is provided with a flange 12 and part of a valve body 14 is sandwiched between the flange 12 and a flange 16 at the lower end of a vent pipe 18. The vent pipe 18 may be open at its top end to atmosphere, or it may lead out of a building in which the pipe line is situated, and it may be fitted with a silencer (not shown).

The construction of the valve body 14 is itself of significance.  Essentially, the valve body 14 comprises a seating element 20, an obturator 22 and a web 24.  The seating element 20 is generally in the form of an annulus, with a frusto-conical bore 26, the larger end of which is on the underside communicating directly with the top end of the branch 10 of the T-piece, and the smaller end on the top side being within the lower end of the tube 18.  The aperture through the seating element 20 formed by the bore 26 constitutes the valve port.  The obturator 22 takes the form of a disc like member, which is spaced vertically above the seating element 20, the web 24 extending between the obturator 22 and the seating member 20, and crossing the aperture through the seating member from side-to-side thereof, so that effectively the aperture is divided by the web 24 into two portions 28 and 30.  It will be noted, that the web 24 is of streamlined shape, so that it offers very little resistance to the flow of working fluid through the two portions of the aperture, and out into the tube 18, through the spaces  between the seating element and the obturator 22.  The seating element 20, web 24 and obturator 22 are formed as an integral valve body.

The top surface 32 of the seating element 20 provides a valve seat, and the rim at the lower end of the skirt 25 of an inverted cup shaped valve member 34 normally rests on this seat as shown in Figures 2 and 3.  The closed top end 27 of the valve member 34 also has a boss 36 bored at 38, so that the valve member is able to slide on an upstanding boss 40 formed on the obturator 22.  It will be noted that there is a narrow annular gap 42 between the periphery of the obturator 22 and the internal surface of the skirt wall of the valve member 34. The restricted peripheral space between the outside of the obturator and the inside of the skirt 25 is referred to as the "throat". (In the drawings, there is also a gap between the bore 38 and the boss 40, but this is exaggerated, and in practice the valve member 34 is a sliding fit on the boss 40, there being no provision for any significant flow of fluid out between the bosses 40 and 36.) A spindle 44 is secured in the boss 40, and projects upwardly therefrom, there being a cap 46 slidable on the spindle 44, and retained by a pair of lock-nuts 48. A helical compression spring 50 engages between the top side of the valve member 34 and the underside of the cap 46 and provides the resilient load urging the valve member 34 into its sealing engagement with the seat formed by the top surface 32 of the seating element 20. It will be appreciated, that the force supplied to the valve member 34 by the spring 50 can be adjusted by turning the lock-nuts 48, and this provides a means of determining the pressure which will have to be applied to the effective under surface of the top of the valve member 34 in order to lift the valve member 34 off the seating surface 32. The effective under surface of the valve member is in fact the annular area between the bore 38 and the inner surface of the skirt 25.

Pressure occurring in the pipe line 108 is applied to the effective under surface of the valve member 34, only after the fluid has passed through the restricted "throat" between the obturator 22 and the skirt wall 25 of the valve member. Hence, relatively small increases in the pressure in the pipe line due for example, to the pulsating effect of the Roots blower, are damped by the "throat" and are not sufficient to lift the valve member 34 off its seat. This is the ordinary effect of the obturator 22 in a valve of this kind, and prevents chattering of the valve member as previously explained. Of course, if the pressure build up in the pipe line 108 is sufficient to cause the valve member 34 to be lifted off its seat, then there is an immediate and considerable release of fluid through the valve and the vent pipe 18 preventing further rise in the pressure in the pipe 108 (and in the pump 100), since the working fluid is able to flow out of the pipe line, through the branch 10, the aperture portions 28 and 30, and the spaces between the seating element 20 and the obturator 22, which spaces are then uncovered by lifting of the valve member 34.

The construction of the valve body 14 as an integral element, is a useful feature of the invention, because it facilitates accurate machining of the various parts which have previously had to be assembled in order to create the seating element and obturator combination.

An auxiliary inlet 52 is formed in one side of the seating element 20, and this inlet 52 leads through a conduit 54 formed in the seating element 20, the web 24 and the obturator 22. This conduit opens into the annular space 56 on the top side of the obturator 22 (that is the side opposite the aperture 26) and hence, there is direct communication between the auxiliary inlet 52 and the effective pressure surface of the valve member 34. A by-pass pipe 116 (Figure 1) is connected between the outlet of the Roots blower 100 and the auxiliary inlet 52. This by-pass pipe is of similar cross-sectional area to the internal conduit 54, and it will be observed that it is of much smaller cross-sectional area than the cross-section of the aperture through the valve body. In a typical instance, where the diameter of the larger end of the aperture through the valve body is 100 millimetres, the diameter of the by-pass conduit 54 and of the by-pass pipe 116 may be 3 millimetres. It is preferable that the relief valve should be located in the pipe line 108 as near as possible to the outlet from the pump 100, and indeed, the T-piece 114 may be connected directly to the pump outlet as shown in Figure 1.

Now it will be apparent, that there is substantially no flow of fluid through the by-pass pipe 116 and the by-pass conduit 54, even when there is a relatively large fluid flow through the pipe line 108, and consequently, the pressure which appears in the space 56 on the underside of the effective pressure surface of the valve member 34, only fluctuates very slightly due to the normal pulsing of the output from the pump, but damped by the by-pass. However, if the pressure at the pump outlet 110 builds up, then that pressure is applied through the by-pass pipe 116 substantially without reduction, to the valve member 34, and when it exceeds a predetermined level, as set by the pressure applied initially to the spring 50, it overcomes the spring pressure, lifting the valve member 34 off its seat, and allowing the fluid to escape through the relief valve. As has been pointed out previously however, the pressure which is applied through the "throat" 42 may be substantially reduced from the pressure occurring at the pump outlet 110, because of flow conditions in the pipe line and in the branch 10.

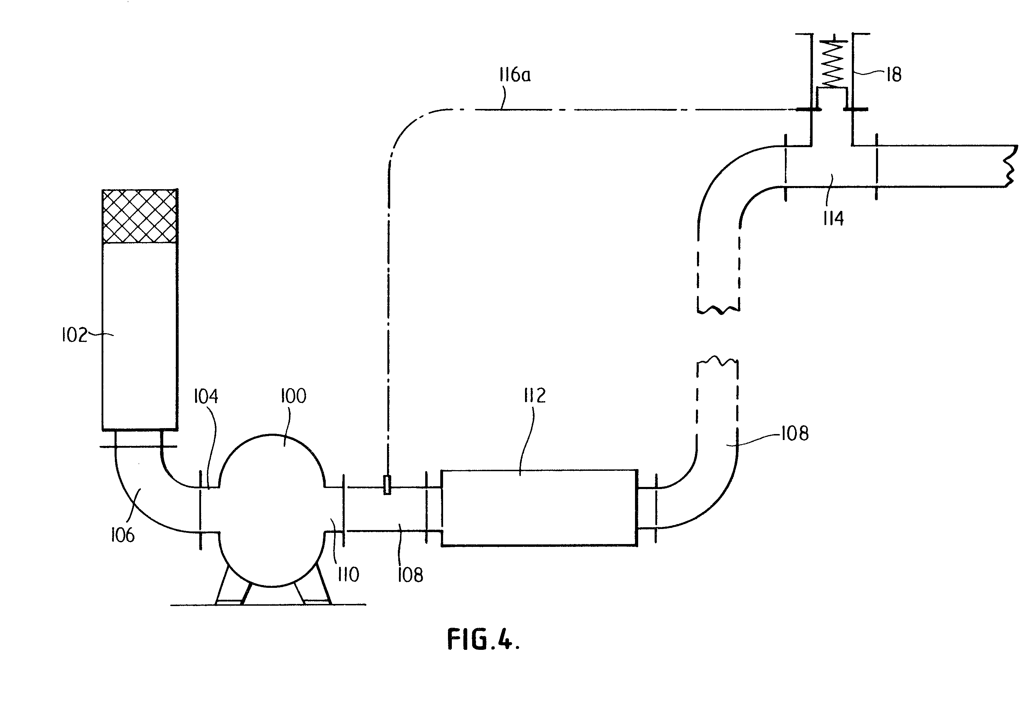

In practice, it is not always possible to arrange the relief valve close to the pump, and Figure 4 illustrates an arrangement in which this is the case.

-11-

The arrangement is similar to that shown in Figure 1, in that there is a Roots blower type positive displacement pump 100, having an inlet 104 and an outlet 110. Air is drawn into the pump 100, through an inlet silencer 102, and an inlet pipe 106.

A pipe line 108 leads from the outlet 110 of the pump 100, and a delivery silencer 112 is provided in the pipe line 108. In this arrangement, the T-piece 114 to which is fitted the pressure relief valve, is sited at an appreciable distance from the outlet 110 of the pump 100, and the path of the pipe 108 between the pump 100 and the T-piece 114 may be tortuous.

Because of the length of the pipe 108 between the pump 100 and the pressure relief valve, there may be an appreciable reduction in pressure due to the impedence of the pipe 108. In this arrangement, a by-pass pipe 116a is connected between the pipe 108 immediately downstream of the pump outlet 110, and the auxiliary inlet 52 of the pressure relief valve. Apart from the fact that the by-pass pipe 116a is of small bore, so that there is practically no flow of air through it in normal operating conditions, it may also be of shorter length than the pipe 108 between the pump and the relief valve, since the by-pass pipe 116a does not have to follow the tortuous path of the main pipe 108. The operation of the relief valve in the system illustrated in Figure 4 is therefore substantially the same as the operation described with reference to Figure 1.

- 12 -

Claims.

1.   A pressure relief valve in which there is a valve member in the form of an inverted cup (34) with its skirt normally resting on a valve seat (32) around an aperture (28, 30), the valve member being movable away from the seat to open a passage through the aperture (28,30), but loaded into the closed position, and an obturator (22) located within the valve member and fixed relatively to the valve seat, characterised in that a by-pass conduit (54) is provided, leading from an auxiliary inlet (52) of the valve, separate from the aperture (28, 30) to the space   (56) between the closed end of the valve member (34) and the obturator (22).

2.   A pressure relief valve as claimed in Claim 1, characterised in that the smallest cross-sectional area of the by-pass conduit (54) is not greater than 0.5% of the cross-sectional area of the aperture (28, 30).

3.   A pressure relief valve as claimed in Claim 1 or Claim 2, characterised in that the effective cross-sectional area of the obturator (22) is smaller than the area of the closed end of the valve member inside the skirt.

4.   A pressure relief valve as claimed in Claim 3, characterised in that part of the by-pass conduit (54) extends through the obturator (22).

5. A pressure relief valve as claimed in any one of Claims 1 to 4, characterised in that the valve has a body comprising a sealing element (20) and the obturator (22) the aperture (28, 30) being formed through the seating element and a face (32) of the seating element providing the valve seat, the obturator (22) being spaced from the valve seat (32) but connected to the seating element (20) by a web (24) arranged so that it permits fluid flow between the seat side of the aperture (29, 30) and the obturator (22), the seating element (20), obturator (22) and web (24) being constructed as an integral valve body, the auxiliary inlet (52) being formed in the seating member (20), and the by-pass conduit (54) extending through the seating member (20), the web (24) and the obturator (22).

6. A pressure relief valve as claimed in Claim 5, characterised in that the web (24) extends into the aperture (28, 30) and across the aperture from one side to the other, thus dividing the aperture into two separate portions.

7. A fluid flow system comprising a pump (100) with a pipe line (108) connected to its outlet, and a pressure relief valve connected in the pipe line, the pressure relief valve having a valve member in the form of an inverted cup (34) with its skirt normally resting on a valve seat (32) around an aperture (28, 30), the valve member being movable away from the seat to open a passage through the aperture (28, 30), but loaded into the closed position, the system being characterised in that a by-pass pipe (116, 116a) leads from the outlet of the pump, or from the pipe line (108) adjacent to the pump outlet to an auxiliary inlet (52) in the valve

- 14 -

separate from the aperture (28, 30) there being a
conduit (54) in the valve leading from the auxiliary inlet
(52) to the space between the closed end of the valve
member (34) and the obturator (22).

FIG.1.

FIG.2.

FIG. 3.

FIG.4.

European Patent
Office

**EUROPEAN SEARCH REPORT**

00328.14

Application number

EP 81300171.6

| Category | Citation of document with indication, where appropriate, of relevant passages | Relevant to claim |
|---|---|---|
| | US - A - 3 957 075 (KUNZ) <br> + Totality + <br> -- | 1,4,5, 6 |
| | GB - A - 1 293 129 (I.V. PRESSURE CONTROLLERS LIMITED) <br> + Totality + <br> -- | 1 |
| | US - A - 3 820 554 (HARNISH) <br> + Totality + <br> ---- | 1,3,5 |

### DOCUMENTS CONSIDERED TO BE RELEVANT

**CLASSIFICATION OF THE APPLICATION (Int. Cl.³)**

F 16 K 17/02

**TECHNICAL FIELDS SEARCHED (Int. Cl.³)**

F 16 K 17/00

G 05 D 7/00

F 16 K 25/00

F 16 K 47/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| X | The present search report has been drawn up for all claims |
|---|---|

| Place of search <br> VIENNA | Date of completion of the search <br> 07-04-1981 | Examiner <br> ROUSSARIAN |
|---|---|---|

EPO Form 1503.1 06.78